# EUROPÄISCHE PATENTSCHRIFT

(11) **EP 3 829 748 B1**
(45) Veröffentlichungstag und Bekanntmachung des Hinweises auf die Patenterteilung: **14.06.2023**
(21) Anmeldenummer: 19739538.7
(22) Anmeldetag: 04.07.2019
(51) Int. Cl.: B01D 53/04, B01D 53/047

(54) **REGENERATIVER CO2-ADSORBER FÜR EIN UNTERSEEBOOT UMFASSEND EINE HEIZ- UND EINE KÜHLVORRICHTUNG**
REGENERATIVE CO2 ADSORBER FOR A SUBMARINE COMPRISING A HEATING AND COOLING DEVICE
ADSORBEUR DE CO2 RÉGÉNÉRATIF POUR UN SOUS-MARIN COMPRENANT UN DISPOSITIF DE CHAUFFAGE ET DE REFROIDISSEMENT

(30) Priorität: 02.08.2018 DE 102018212898
(43) Veröffentlichungstag der Anmeldung: 09.06.2021
(73) Patentinhaber: thyssenkrupp Marine Systems GmbH, 24143 Kiel (DE); thyssenkrupp AG, 45143 Essen (DE)
(72) Erfinder: BÜCHNER, Richard, 23611 Bad Schwartau (DE); SCHMIDT, Katharina, 24103 Kiel (DE)
(74) Vertreter: thyssenkrupp Intellectual Property GmbH
(86) Internationale Anmeldenummer: PCT/EP2019/067934
(87) Internationale Veröffentlichungsnummer: WO 2020/025247

(56) Entgegenhaltungen:
- DE-A1-102013 223 342
- JP-A- 2013 128 908
- US-A1- 2012 160 098
- US-A1- 2017 203 249
- US-A1- 2018 021 717

## Beschreibung

Die Erfindung betrifft eine Vorrichtung zur Abtrennung von Kohlenstoffdioxid aus der Atemluft in einem Unterseeboot.

Zur Abtrennung von Kohlenstoffdioxid gibt es eine Reihe von Methoden. Insbesondere werden Filter aus Kalk oder Lithiumhydroxid verwendet. Nachteil dieser Filter ist jedoch, dass diese nicht während der Fahrt regeneriert werden können. Somit muss das Unterseeboot ausreichend Filterkapazität mitführen. Dieses führt zu einer hohen Gewichtsbelastung. Zusätzlich müssen die Filter regelmäßig getauscht werden, wobei das Risiko der Freisetzung von Staub besteht.

Zur Abtrennung von Kohlenstoffdioxid wird als Filter, welcher regeneriert werden kann, teilweise ein Feststoff mit Aminfunktionalität eingesetzt. Derartige Filter werden zunächst mit Kohlenstoffdioxid aus Atemluft beladen und anschließend in einem Regenerationszyklus durch Erwärmen regeneriert. Nachteil ist, dass das Amin beim Erwärmen degradiert.

Aus der DE 10 2008 015 150 B4 ist ein Unterseeboot mit einer Belüftungseinrichtung und einer CO₂-Absorptionseinrichtung bekannt.

Aus der US 2017/203249 A1 ist ein Verfahren zur dampfunterstützen Desorption von Kohlendioxid bekannt.

Aus der US 2012/160098 A1 ist ein Verfahren zur Entfernung von Kohlendioxid bekannt, wobei Kohlendioxid an einem festen Aminabsorber adsorbiert wird und durch Erhitzen wieder desorbiert wird.

Aus der JP 2013 128908 A ist ein Verfahren zur Rückgewinnung von Kohlendioxid in Eisenmühlen bekannt.

Aus der US 2018/021717 A1 ist eine Vorrichtung zur Reduktion der Kohlendioxidkonzentration bekannt.

Aus der DE 10 2013 223342 A1 ist eine CO₂-Bindeeinrichtung bekannt.

Aufgabe der Erfindung ist es, eine Vorrichtung zur Abtrennung von Kohlendioxid bereitzustellen, welche keine oder nur eine möglichst geringe Degradation aufweist.

Gelöst wird diese Aufgabe durch eine Vorrichtung mit den in Anspruch 1 angegebenen Merkmalen, das Verfahren mit den in Anspruch 11 angegebenen Merkmalen sowie durch ein Unterseeboot mit den in Anspruch 1 angegebenen Merkmalen. Vorteilhafte Weiterbildungen ergeben sich aus den Unteransprüchen, der nachfolgenden Beschreibung sowie der Zeichnungen.

Die erfindungsgemäße Vorrichtung zur Abtrennung von Kohlenstoffdioxid aus einem Gasgemisch weist einen Feststoff zur Aufnahme von Kohlenstoffdioxid auf. Weiter weist die Vorrichtung eine Heizung zur Erwärmung des Feststoffs auf. Des Weiteren weist die Vorrichtung eine Hülle auf, wobei die Hülle evakuierbar ist. Zusätzlich weist die Vorrichtung eine Kühlvorrichtung auf.

Die erfindungsgemäße Vorrichtung ist vorteilhaft, da die Hülle vor dem Erwärmen des Feststoffs evakuiert werden kann. Hierdurch wird Sauerstoff aus der Hülle entfernt oder wenigstens der Partialdruck des Sauerstoffs auf ein Minimum reduziert. Hierdurch wird die Degradation beim Erhitzen minimiert. Nach Beendigung der Regeneration wird der Feststoff mit der Kühlvorrichtung zunächst so weit abgekühlt, dass bei einer Zuführung von Umgebungsluft und die damit von Sauerstoff keine Degradation mehr auftritt.

In einer weiteren Ausführungsform der Erfindung sind die Heizung und der Feststoff in direktem Kontakt angeordnet, insbesondere ist die Heizung im Feststoff eingebettet, sodass ein direkter Kontakt stattfindet.

Erfindungsgemäß ist die Kühlvorrichtung eine Wasserinjektion. Durch das Einsprühen von Wasser kann der Feststoff aufgrund der hohen Wärmekapazität von Wasser und gegebenenfalls der hohen Verdampfungsenthalpie von Wasser effizient und schnell abgekühlt werden. Besonders bevorzugt ist die Vorrichtung eine Wasserinjektionseinheit zur Erzeugung eines Wassernebels ausgebildet.

In einer weiteren alternativen Ausführungsform der Erfindung ist die Kühlvorrichtung in die Heizung integriert. Beispielsweise weist die gemeinsame Heiz- und Kühlvorrichtung elektrische Heizspiralen und Kühlwasserleitungen auf. Alternativ weist die gemeinsame Heiz- und Kühlvorrichtung eine Wasserleitung auf, wobei die Wasserleitung sowohl Warmwasser als auch Kaltwasser führen kann. Weiter alternativ kann die gemeinsame Heiz- und Kühlvorrichtung elektrisch, insbesondere direkt elektrisch, arbeiten. Beispielsweise wird ein Peltier Element verwendet.

In einer weiteren Ausführungsform der Erfindung weist die Hülle eine zylindrische Form auf. Die Gasströmung läuft entlang der Längsrichtung der zylindrischen Form. Der Feststoff ist scheibenförmig im Inneren der zylindrischen Form angeordnet, wobei der Feststoff gasdurchlässig ist. Unter scheibenförmig ist zu verstehen, dass der Feststoff eine vergleichsweise große Querschnittsfläche im Verhältnis zur Dicke aufweist. Hierdurch wird der Strömungswiderstand, welcher der Feststoff dem Gasstrom bietet minimiert. Vergleichsweise bedeutet, dass der Durchmesser des Feststoffes vorzugsweise wenigstens fünfmal größer als die Dicke ist, besonders bevorzugt wenigstens zehnmal größer als die Dicke ist, weiter bevorzugt wenigstens 100 mal größer als die Dicke ist.

In einer weiteren Ausführungsform der Erfindung ist der Feststoff in Form einer ersten Scheibe und einer zweiten Scheibe angeordnet, wobei die Heizung zwischen der ersten Scheibe und der zweiten Scheibe angeordnet ist. Durch diese Anordnung ist eine effiziente Heizung des Feststoffs möglich.

In einer weiteren Ausführungsform der Erfindung der Feststoff zusätzlich in Form einer dritte Scheibe angeordnet ist. Weiter ist eine weitere Heizung zwischen der zweiten Scheibe und der dritten Scheibe angeordnet. Selbstverständlich kann auch eine größere Zahl an Feststoffschichten und Heizungen angeordnet werden.

In einer weiteren Ausführungsform der Erfindung besteht der Feststoff wenigstens teilweise aus Amin. Besonders bevorzugt handelt es sich um ein Polymer mit Aminfunktionalität.

In einer weiteren Ausführungsform der Erfindung weist die Vorrichtung eine Kondensationsvorrichtung auf. In einer ersten Ausführungsform ist die Kondensationsvorrichtung in Gasströmungsrichtung hinter dem Feststoff angeordnet. In einer weiteren alternativen Ausführungsform ist die Kondensationsvorrichtung in Gasströmungsrichtung vor dem Feststoff angeordnet. Die Kondensationsvorrichtung ist besonders bevorzugt, sofern die Vorrichtung eine Wasserinjektion aufweist.

In einer weiteren Ausführungsform der Erfindung weist die Vorrichtung zusätzlich ein Bauteil zum Lösen von Kohlenstoffdioxid in Wasser auf. Derartige Bauteile zum Lösen von Kohlenstoffdioxid in Wasser sind wohlbekannt, beispielsweise und insbesondere aus außenluftunabhängigen Dieselmotoren für Unterseeboote.

In einem weiteren Aspekt betrifft die Erfindung ein Verfahren zur Abtrennung von Kohlendioxid aus einem Gasgemisch mit einer erfindungsgemäßen Vorrichtung, wobei das Verfahren die folgenden Schritte aufweist:
a) Durchleiten des zu reinigenden Gasgemisches,
b) Beenden der Zuführung von zu reinigenden Gasgemisch,
c) Evakuieren der Vorrichtung,
d) Erhitzen des Feststoffes mittels der Heizung,
e) Kühlen,
f) erneutes Durchleiten des zu reinigenden Gastgemisches.

Durch das Evakuieren in Schritt c) wird der Partialdruck von Sauerstoff deutlich reduziert. Hierdurch kann es in Schritt d) nicht zu einer Degradation des Feststoffes kommen, da kein Sauerstoff als Reaktionspartnern ausreichendem Umfang zur Verfügung steht. Durch das Abkühlen in Schritt e) ist der Feststoff beim erneuten Kontakt mit Sauerstoff in Schritt f) bereits auf einer Temperatur, bei welcher keine Degradation auftritt.

In einer weiteren Ausführungsform der Erfindung wird in Schritt d) der Feststoff auf wenigstens 70 °C, bevorzugt auf wenigstens 80 °C, besonders bevorzugt auf wenigstens 90 °C erhitzt wird. Der Feststoff wird in Schritt d) auf höchstens 110 °C, bevorzugt auf höchstens 100 °C erhitzt. Ist die Temperatur zu gering, kann Kohlenstoffdioxid nicht freigesetzt werden. Ist die Temperatur zu hoch, so degradiert der Feststoff auch ohne Anwesenheit von Sauerstoff.

In einer weiteren Ausführungsform der Erfindung erfolgt in Schritt e) das Kühlen durch Einsprühen von Wasser. Mittels Wasser kann der Feststoff aufgrund der hohen Wärmekapazität von Wasser und gegebenenfalls der hohen Verdampfungsenthalpie von Wasser effizient und schnell abgekühlt werden. Hierdurch wird die Dauer von Schritt e) auf ein Minimum reduziert.

In einer weiteren Ausführungsform der Erfindung wird in Schritt e) der Feststoff auf höchstens 55 °C, bevorzugt auf höchstens 45 °C, besonders bevorzugt auf höchstens 35 °C abgekühlt.

In einer weiteren Ausführungsform der Erfindung wird in Schritt c) auf weniger als 10.000 Pa, bevorzugt auf weniger als 2.000 Pa, besonders bevorzugt auf weniger als 1.000 Pa, ganz besonders bevorzugt auf weniger als 500 Pa evakuiert wird.

In einer weiteren Ausführungsform der Erfindung wird in Schritt c) auf mehr als 0,1 Pa, bevorzugt mehr als 1 Pa, besonders bevorzugt mehr als 10 Pa evakuiert wird.

In einer weiteren Ausführungsform der Erfindung wird in Schritt d) kontinuierlich evakuiert.

In einer weiteren Ausführungsform der Erfindung wird in Schritt d) das aus der Vorrichtung abgeführte Gas in ein Bauteil zum Lösen von Kohlenstoffdioxid in Wasser geleitet. Auf diese Weise wird das Kohlenstoffdioxid von Bord gebracht.

In einer weiteren Ausführungsform der Erfindung wird in Schritt e) demineralisiertes oder destilliertes Wasser eingesprüht.

In einer weiteren Ausführungsform der Erfindung wird in Schritt a) und in Schritt f) eine radiale Strömung im Inneren der Vorrichtung eingestellt.

Die Erfindung betrifft ein Unterseeboot mit einer erfindungsgemäßen Vorrichtung.

In einer weiteren Ausführungsform der Erfindung weist das Unterseeboot wenigstens drei erfindungsgemäße Vorrichtungen auf. Hiervon befindet sich vorzugsweise eine erste erfindungsgemäße Vorrichtung in Schritt a) oder f), eine zweite erfindungsgemäßen Vorrichtung in Schritt d) und eine dritte erfindungsgemäße Vorrichtung in Stand-by. Alternativ oder zu einem anderen Zeitpunkt befindet sich vorzugsweise eine erste erfindungsgemäße Vorrichtung in Schritt a) oder f), eine zweite erfindungsgemäßen Vorrichtung in Schritt d) und eine dritte erfindungsgemäße Vorrichtung in Schritt e). Weiter Alternativ oder zu einem anderen Zeitpunkt befindet sich vorzugsweise eine erste erfindungsgemäße Vorrichtung in Schritt a) oder f), eine zweite erfindungsgemäßen Vorrichtung in Schritt c) oder d) und eine dritte erfindungsgemäße Vorrichtung in Schritt e) oder in Stand-By. Durch die Verwendung von drei erfindungsgemäßen Vorrichtungen kann ein kontinuierlicher Betrieb effizient sichergestellt werden. Gleichzeitig ist auch eine Redundanz gegeben.

In einer weiteren Ausführungsform der Erfindung weist das Unterseeboot mehr als drei erfindungsgemäße Vorrichtungen auf, wobei sich vorzugsweise genau eine erfindungsgemäße Vorrichtung in Schritt a) oder f) befindet. Alternativ in sehr großen Unterseebooten weist das Unterseeboot 3 n + m erfindungsgemäße Vorrichtungen auf, wobei sich vorzugsweise genau n erfindungsgemäße Vorrichtungen in Schritt a) oder f) befinden, wobei n und m natürliche Zahlen sind, wobei n mindestens 1 und m mindestens 0 ist.

Nachfolgend sind die erfindungsgemäße Vorrichtung sowie das erfindungsgemäße Verfahren anhand eines in den Zeichnungen dargestellten Ausführungsbeispiels näher erläutert.
Fig. 1 Querschnitt einer ersten Ausführungsform
Fig. 2 Querschnitt einer zweiten Ausführungsform
Fig. 3 Blockdiagramm

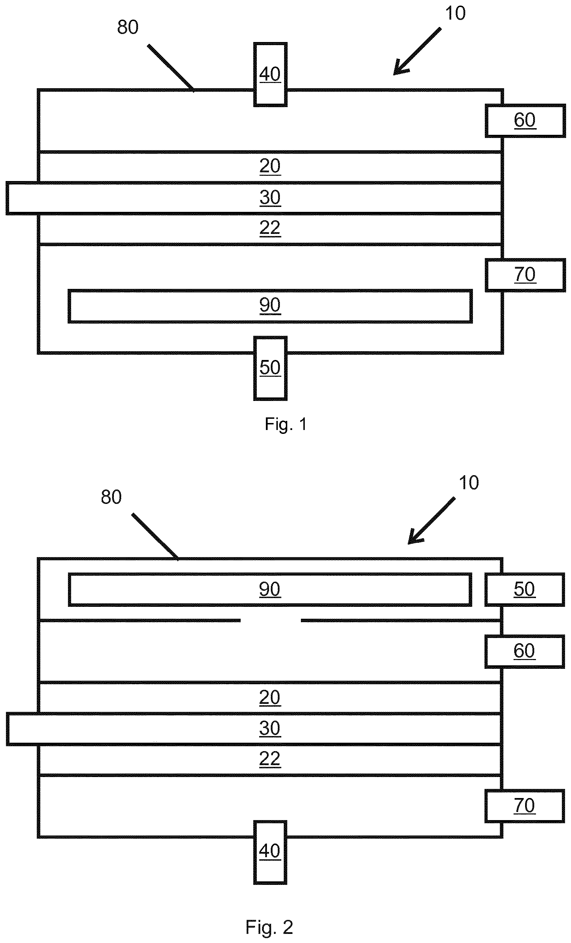

In Fig. 1 ist die erfindungsgemäße Vorrichtung in einer ersten Ausführungsform beispielhaft im Querschnitt gezeigt. Die Vorrichtung zur Abtrennung von Kohlenstoffdioxid 10 weist eine Hülle 80 auf. In dieser Hülle 80 ist eine erste Scheibe 20 aus einem Feststoff und eine zweite Scheibe 22 aus einem Feststoff angeordnet. Zwischen der ersten Scheibe 20 und der zweiten Scheibe 22 eine Heizung 30 eingebettet. Durch eine Lufteintritt 60 wird Atemluft in die Vorrichtung zehn eingeführt, durch den Feststoff hindurch, sodass Kohlenstoffdioxid absorbiert wird. Anschließend wird die gereinigte Luft durch den Luftauslass 70 wieder abgegeben. Zur Regeneration werden Lufteintritt 60 und Luftaustritt 70 geschlossen und die Vorrichtung 10 über den Anschluss zum Evakuieren 50 evakuiert. Nach Erreichen eines ausreichenden Vakuums wird über die Heizung 30 der Feststoff erwärmt. Desorbiertes Kohlenstoffdioxid wird durch den Anschluss zum Evakuieren 50 entfernt. Nach erfolgreicher Regeneration wird die Heizung 30 deaktiviert und die Kühlvorrichtung 40 aktiviert. Im gezeigten Beispiel erzeugt die Kühlvorrichtung 40 einen Wassernebel. Der Wassernebel trifft auf die erste Scheibe 20 und die zweite Scheibe 22 und führt so den Feststoff ab. Entstehender Wasserdampf wird einer Kondensationsvorrichtung 90 kondensiert. Ist der Feststoff abgekühlt können Lufteintritt 60 und Luftauslass 70 erneut geöffnet werden.

In Fig. 2 ist eine zweite alternative erfindungsgemäße Vorrichtung im Querschnitt gezeigt. Im Unterschied zur ersten erfindungsgemäße Vorrichtung gemäß Fig. 1 insbesondere dadurch, dass die Kondensationsvorrichtung 90 oberhalb angeordnet ist. Daher ist die Kondensationsvorrichtung 90 in einem partiell separierten Teil der Hülle 80 angeordnet. Darauf ergibt sich auch, dass Kühlvorrichtung 40 unterhalb angeordnet ist. Weiter ist der Anschluss zum Evakuieren 50 oberhalb in Nähe zur Kondensationsvorrichtung 90 angeordnet.

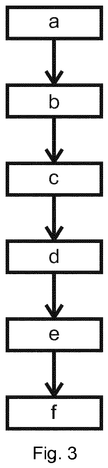

Fig. 3 zeigt ein schematisches Blockdiagramm des erfindungsgemäßen Verfahrens. Das Verfahren umfasst die folgenden Schritte:
a) Durchleiten des zu reinigenden Gasgemisches,
b) Beenden der Zuführung von zu reinigenden Gasgemisch,
c) Evakuieren der Vorrichtung,
d) Erhitzen des Feststoffes mittels der Heizung,
e) Kühlen,
f) erneutes Durchleiten des zu reinigenden Gastgemisches.

### Bezugszeichen

- 10: Vorrichtung zur Abtrennung von Kohlenstoffdioxid
- 20: erste Scheibe
- 22: zweite Scheibe
- 30: Heizung
- 40: Kühlvorrichtung
- 50: Anschluss zum Evakuieren
- 60: Lufteintritt
- 70: Luftauslass
- 80: Hülle
- 90: Kondensationsvorrichtung

## Patentansprüche

1. Unterseeboot mit einer Vorrichtung zur Abtrennung von Kohlenstoffdioxid (10) aus einem Gasgemisch, wobei die Vorrichtung (10) einen Feststoff zur Aufnahme von Kohlenstoffdioxid aufweist, wobei die Vorrichtung (10) eine Heizung (30) zur Erwärmung des Feststoffs aufweist, wobei die Vorrichtung (10) eine Hülle (80) aufweist, wobei die Hülle (80) evakuierbar ist, wobei die Vorrichtung (10) eine Kühlvorrichtung (40) aufweist, **dadurch gekennzeichnet, dass** die Kühlvorrichtung (40) eine Wasserinjektion ist.

2. Unterseeboot nach Anspruch 1, **dadurch gekennzeichnet, dass** die Heizung (30) und der Feststoff in direktem Kontakt angeordnet sind.

3. Unterseeboot nach einem der vorstehenden Ansprüche, **dadurch gekennzeichnet, dass** die Kühlvorrichtung (40) als Wasserinjektionseinheit zur Erzeugung eines Wassernebels ausgebildet ist.

4. Unterseeboot nach einem der vorstehenden Ansprüche, **dadurch gekennzeichnet, dass** die Hülle (80) eine zylindrische Form aufweist, wobei die Gasströmung entlang der Längsrichtung der zylindrischen Form läuft, wobei der Feststoff scheibenförmig im Inneren der zylindrischen Form angeordnet ist, wobei der Feststoff gasdurchlässig ist.

5. Unterseeboot nach Anspruch 4, **dadurch gekennzeichnet, dass** der Feststoff in Form einer ersten Scheibe (20) und einer zweiten Scheibe (22) angeordnet ist, wobei die Heizung (30) zwischen der ersten Scheibe (20) und der zweiten Scheibe (22) angeordnet ist.

6. Unterseeboot nach Anspruch 5, **dadurch gekennzeichnet, dass** ein weiterer Feststoff in Form einer dritte Scheibe angeordnet ist, wobei eine weitere Heizung zwischen der zweiten Scheibe (22) und der dritten Scheibe angeordnet ist.

7. Unterseeboot nach einem der Ansprüche 4 bis 6, **dadurch gekennzeichnet, dass** die Dicke des scheibenförmig angeordneten Feststoffs höchstens 10 % des Durchmessers der Hülle (80) aufweist, wobei die Dicke des scheibenförmig angeordneten Feststoffs wenigstens ein Prozent des Durchmessers der Hülle (80) aufweist.

8. Unterseeboot nach einem der vorstehenden Ansprüche, **dadurch gekennzeichnet, dass** der Feststoff wenigstens teilweise aus Amin besteht.

9. Unterseeboot nach einem der vorstehenden Ansprüche, **dadurch gekennzeichnet, dass** die Vorrichtung (10) eine Kondensationsvorrichtung (90) aufweist, wobei die Kondensationsvorrichtung (90) in Gasströmungsrichtung hinter dem Feststoff angeordnet ist.

10. Unterseeboot nach einem der vorstehenden Ansprüche, wobei das Unterseeboot wenigstens drei Vorrichtungen (10) aufweist.

11. Verfahren zur Abtrennung von Kohlendioxid an Bord eines Unterseebootes aus einem Gasgemisch mit einer Vorrichtung (10) nach einem der vorstehenden Ansprüche, wobei das Verfahren die folgenden Schritte aufweist:
a) Durchleiten des zu reinigenden Gasgemisches,
b) Beenden der Zuführung von zu reinigenden Gasgemisch,
c) Evakuieren der Vorrichtung (10),
d) Erhitzen des Feststoffes mittels der Heizung (30),
e) Kühlen,
f) erneutes Durchleiten des zu reinigenden Gastgemisches.

12. Verfahren nach Anspruch 11, **dadurch gekennzeichnet, dass** in Schritt d) der Feststoff auf wenigstens 70 °C, bevorzugt auf wenigstens 80 °C, besonders bevorzugt auf wenigstens 90 °C erhitzt wird, wobei der Feststoff auf höchstens 110 °C, bevorzugt auf höchstens 100 °C erhitzt wird.

13. Verfahren nach einem der Ansprüche 11 bis 12, **dadurch gekennzeichnet, dass** in Schritt e) das Kühlen durch Einsprühen von Wasser erfolgt.

14. Verfahren nach einem der Ansprüche 11 bis 13, **dadurch gekennzeichnet, dass** in Schritt e) der Feststoff auf höchstens 55 °C, bevorzugt auf höchstens 45 °C, besonders bevorzugt auf höchstens 35 °C abgekühlt wird.

15. Verfahren nach einem der Ansprüche 11 bis 14, **dadurch gekennzeichnet, dass** in Schritt d) kontinuierlich evakuiert wird.

16. Verfahren nach einem der Ansprüche 11 bis 15, **dadurch gekennzeichnet, dass** in Schritt a) und in Schritt f) eine radiale Strömung im Inneren der Vorrichtung (10) eingestellt wird.

## Claims

1. Submarine with a device for separating carbon dioxide (10) from a gas mixture, wherein the device (10) has a solid material for taking up carbon dioxide, wherein the device (10) has a heating unit (30) for heating the solid material, wherein the device (10) has a shell (80), wherein the shell (80) is evacuable, wherein the device (10) has a cooling device (40), **characterized in that** the cooling device (40) is water injection.

2. Submarine according to Claim 1, **characterized in that** the heating unit (30) and the solid material are arranged in direct contact.

3. Submarine according to either of the preceding claims, **characterized in that** the cooling device (40) is formed as a water injection unit for producing a water mist.

4. Submarine according to one of the preceding claims, **characterized in that** the shell (80) has a cylindrical form, wherein the gas flow passes along the longitudinal direction of the cylindrical form, wherein the solid material is arranged in the form of a disc in the interior of the cylindrical form, wherein the solid material is gas-permeable.

5. Submarine according to Claim 4, **characterized in that** the solid material is arranged in the form of a first disc (20) and a second disc (22), wherein the heating unit (30) is arranged between the first disc (20) and the second disc (22).

6. Submarine according to Claim 5, **characterized in that** a further solid material is arranged in the form of a third disc, wherein a further heating unit is arranged between the second disc (22) and the third disc.

7. Submarine according to one of Claims 4 to 6, **characterized in that** the thickness of the solid material arranged in the form of a disc comprises at most 10% of the diameter of the shell (80), wherein the thickness of the solid material arranged in the form of a disc comprises at least one percent of the diameter of the shell (80).

8. Submarine according to one of the preceding claims, **characterized in that** the solid material consists at least partially of amine.

9. Submarine according to one of the preceding claims, **characterized in that** the device (10) has a condensation device (90), wherein the condensation device (90) is arranged downstream of the solid material in the direction of gas flow.

10. Submarine according to one of the preceding claims, wherein the submarine has at least three devices (10) .

11. Method for separating carbon dioxide on board a submarine from a gas mixture with a device (10) according to one of the preceding claims, wherein the method comprises the following steps:
a) passing through the gas mixture to be cleaned,
b) ending the supplying of the gas mixture to be cleaned,
c) evacuating the device (10),
d) heating the solid material by means of the heating unit (30),
e) cooling,
f) renewed passing through of the gas mixture to be cleaned.

12. Method according to Claim 11, **characterized in that** in step d) the solid material is heated to at least 70°C, preferably to at least 80°C, particularly preferably to at least 90°C, wherein the solid material is heated to at most 110°C, preferably to at most 100°C.

13. Method according to one of Claims 11 to 12, **characterized in that** in step e) the cooling takes place by spraying in water.

14. Method according to one of Claims 11 to 13, **characterized in that** in step e) the solid material is cooled down to at most 55°C, preferably to at most 45°C, particularly preferably to at most 35°C.

15. Method according to one of Claims 11 to 14, **characterized in that** in step d) evacuation takes place continuously.

16. Method according to one of Claims 11 to 15, **characterized in that** in step a) and in step f) a radial flow is set inside the device (10).

## Revendications

1. Sous-marin avec un dispositif pour la séparation de dioxyde de carbone (10) d'un mélange gazeux, le dispositif (10) présentant un solide pour la réception de dioxyde de carbone, le dispositif (10) présentant un chauffage (30) pour le chauffage du solide, le dispositif (10) présentant une coque (80), la coque (80) pouvant être évacuée, le dispositif (10) présentant un dispositif de refroidissement (40), **caractérisé en ce que** le dispositif de refroidissement (40) est une injection d'eau.

2. Sous-marin selon la revendication 1, **caractérisé en ce que** le chauffage (30) et le solide sont agencés en contact direct.

3. Sous-marin selon l'une quelconque des revendications précédentes, **caractérisé en ce que** le dispositif de refroidissement (40) est réalisé sous forme d'unité d'injection d'eau pour la production d'un brouillard d'eau.

4. Sous-marin selon l'une quelconque des revendications précédentes, **caractérisé en ce que** la coque (80) présente une forme cylindrique, l'écoulement du gaz passant le long de la direction longitudinale de la forme cylindrique, le solide étant agencé en forme de disque à l'intérieur de la forme cylindrique, le solide étant perméable au gaz.

5. Sous-marin selon la revendication 4, **caractérisé en ce que** le solide est agencé sous la forme d'un premier disque (20) et d'un deuxième disque (22), le chauffage (30) étant agencé entre le premier disque (20) et le deuxième disque (22).

6. Sous-marin selon la revendication 5, **caractérisé en ce qu'**un solide supplémentaire est agencé sous la forme d'un troisième disque, un autre chauffage étant agencé entre le deuxième disque (22) et le troisième disque.

7. Sous-marin selon l'une quelconque des revendications 4 à 6, **caractérisé en ce que** l'épaisseur du solide agencé en forme de disque représente au plus 10 % du diamètre de la coque (80), l'épaisseur du solide agencé en forme de disque représentant au moins un pour cent du diamètre de la coque (80).

8. Sous-marin selon l'une quelconque des revendications précédentes, **caractérisé en ce que** le solide est au moins partiellement constitué d'amine.

9. Sous-marin selon l'une quelconque des revendications précédentes, **caractérisé en ce que** le dispositif (10) présente un dispositif de condensation (90), le dispositif de condensation (90) étant agencé derrière le solide dans la direction d'écoulement du gaz.

10. Sous-marin selon l'une quelconque des revendications précédentes, le sous-marin présentant au moins trois dispositifs (10).

11. Procédé pour la séparation de dioxyde de carbone à bord d'un sous-marin à partir d'un mélange gazeux avec un dispositif (10) selon l'une quelconque des revendications précédentes, le procédé présentant les étapes suivantes :
a) le passage du mélange gazeux à purifier,
b) l'arrêt de l'amenée du mélange gazeux à purifier,
c) l'évacuation du dispositif (10),
d) le chauffage du solide au moyen du chauffage (30),
e) le refroidissement,
f) le nouveau passage du mélange gazeux à purifier.

12. Procédé selon la revendication 11, **caractérisé en ce que**, dans l'étape d), le solide est chauffé à au moins 70 °C, de préférence à au moins 80 °C, de manière particulièrement préférée à au moins 90 °C, le solide étant chauffé à au plus 110 °C, de préférence à au plus 100 °C.

13. Procédé selon l'une quelconque des revendications 11 à 12, **caractérisé en ce que**, dans l'étape e), le refroidissement est effectué par injection d'eau.

14. Procédé selon l'une quelconque des revendications 11 à 13, **caractérisé en ce que**, dans l'étape e), le solide est refroidi à au plus 55 °C, de préférence à au plus 45 °C, de manière particulièrement préférée à au plus 35 °C.

15. Procédé selon l'une quelconque des revendications 11 à 14, **caractérisé en ce que**, dans l'étape d), une évacuation est effectuée en continu.

16. Procédé selon l'une quelconque des revendications 11 à 15, **caractérisé en ce que**, dans l'étape a) et dans l'étape f), un écoulement radial est ajusté à l'intérieur du dispositif (10).
